# DEMANDE DE BREVET EUROPEEN

(11) **EP 3 508 408 A1**
(43) Date de publication de la demande: **10.07.2019**
(21) Numéro de dépôt: 19150480.2
(22) Date de dépôt: 07.01.2019
(51) Int. Cl.: B62K 3/00, B62K 5/02, B62K 9/02

(54) **ENGIN ROULANT DESTINÉ À ÊTRE CHEVAUCHÉ PAR UN ENFANT**

(30) Priorité: 08.01.2018 FR 1850123
(71) Demandeur: ID Development Limited, Kowloon Hong-Kong (HK)
(72) Inventeur: MAZOYER, Joseph, 69110 SAINTE FOY LES LYON (FR); BAJARD, Philippe, 69005 LYON (FR)
(74) Mandataire: LLR

(57) **Abrégé**

Selon l'invention, cet engin (1) comprend :
- un montant avant médian (2a), muni d'au moins une roue avant (4) à son extrémité inférieure
- un siège (7) situé au niveau de l'extrémité supérieure du montant avant médian (2a) ;
- deux branches déployables (5), reliées de manière pivotante, par une extrémité avant, à une partie inférieure du montant avant médian (2a), et comprenant chacune une roue (6) à une extrémité arrière ;
- un coulisseau (18) mobile en coulissement le long dudit montant avant médian (2a), et deux biellettes (24) reliées à ce coulisseau (18), sur deux côtés opposés de celui-ci, et reliées auxdites branches (5) ; ce coulisseau (18) est mobile entre une position inférieure, dans laquelle les biellettes (24) amènent lesdites branches (5) dans ladite position de dépliage et une position supérieure, dans laquelle les biellettes (24) amènent lesdites branches (5) dans ladite position de pliage ; et
- de moyens libérables (30) de maintien du coulisseau (18) dans ladite position inférieure.

## Description

La présente invention concerne un engin roulant destiné à être chevauché par un enfant.

Il existe différentes sortes d'engins destinés à être chevauchés par des enfants. Ces engins sont souvent encombrants et occupent une place importante dans un logement lorsqu'ils ne sont pas utilisés.

La présente invention a pour objectif de remédier à cet inconvénient important.

Il existe par ailleurs des engins repliables ; ces engins ne sont pas toujours très faciles et rapides à déplier et ne donnent donc pas parfaitement satisfaction.

La présente invention a également pour objectif de remédier à cet inconvénient.

Les documents CN 206 155 702 U, GB 1 505 224 A et US 4,045,048 A décrivent divers engins selon la technique antérieure, ne permettant pas d'atteindre cet objectif. Le préambule de la revendication 1 annexée mentionne les caractéristiques qui sont connues de par le document CN 206 155 702 U ; la partie caractérisante de cette revendication 1 définit l'invention protégée.

Pour atteindre au moins un des objectifs mentionnés ci-dessus, l'engin selon l'invention comprend donc :
- un montant avant médian, comprenant au moins une roue avant à son extrémité inférieure ;
- un siège situé au niveau de l'extrémité supérieure du montant avant médian ;
- deux branches déployables, reliées de manière pivotante, par une extrémité avant, à une partie inférieure du montant avant médian, et comprenant chacune une roue à une extrémité arrière ; ces deux branches sont mobiles en pivotement entre une position de dépliage, dans laquelle les extrémités arrière des branches sont placées à distance dudit montant avant médian et les roues arrière sont situées, avec la ou les roues avant, dans un plan s'étendant à distance du siège, et une position de pliage, dans laquelle les deux branches sont rapprochées dudit montant avant et les roues arrière se situent au-dessus du siège ; les plans de pivotement desdites branches forment l'un avec l'autre un angle aigu ;
- un coulisseau mobile en coulissement le long dudit montant avant médian, et deux biellettes reliées à ce coulisseau, sur deux côtés opposés de celui-ci, et reliées auxdites branches, une première biellette étant située sur un premier côté du montant avant médian et étant reliée à une première desdites branches, et la deuxième biellette étant située sur un deuxième côté du montant avant médian, opposé au premier côté, et étant reliée à la deuxième branche ; le coulisseau est mobile le long du montant avant médian entre une position inférieure, dans laquelle les biellettes amènent lesdites branches dans ladite position de dépliage et une position supérieure, dans laquelle les biellettes amènent lesdites branches dans ladite position de pliage ; et
- de moyens libérables de maintien du coulisseau dans ladite position inférieure.

Il sera compris que les termes faisant référence à une disposition de l'engin dans l'espace, en particulier "supérieur" et "inférieur", sont à considérer alors que l'engin est dans un état de dépliage et avec ses roues posées sur le sol, et que les termes "avant" et "arrière" sont à considérer par rapport au sens normal d'avance de l'engin sur le sol.

À l'état de dépliage de l'engin, le coulisseau est maintenu par lesdits moyens de maintien dans ladite position inférieure et positionne donc les branches à distance dudit montant avant médian et à distance du siège ; dans cet état, les axes des différentes roues de l'engin se trouvent un plan sensiblement parallèle à un plan dans lequel s'étend, d'une façon générale, l'assise du siège, et situé à distance de ce siège, de sorte que l'engin peut être utilisé par un enfant venant s'asseoir sur le siège. Pour amener l'engin en position de pliage, lesdits moyens de maintien sont libérés de façon à libérer le coulissement du coulisseau le long du montant avant médian vers ladite position supérieure de ce coulisseau ; le déplacement du coulisseau permet un pivotement des deux branches vers ladite position de pliage.

L'engin est ainsi pliable de façon simple et rapide à réaliser, et a un encombrement réduit lorsqu'il est dans cet état de pliage.

L'angle que forment l'un avec l'autre les deux plans dans lesquels les deux branches pivotent peut notamment être compris entre environ 30° et environ 80°.

De préférence, ladite au moins une roue avant est montée pivotante sur une embase solidaire de la partie inférieure dudit montant avant médian.

Cette roue avant est ainsi apte à permettre à l'engin d'opérer des virages.

De préférence, ladite embase forme des chapes recevant les extrémités avant desdites branches et permettant ainsi le montage pivotant de ces branches sur le montant avant médian

Ce montage des branches est ainsi réalisé de manière simple.

De préférence également, ladite embase forme certains desdits moyens de maintien libérables ; en particulier, lorsque ces moyens comprennent une patte pivotante solidaire du coulisseau, incluant une portion crochetage, ladite embase forme une cavité délimitant un rebord de crochetage derrière lequel ladite portion de crochetage est destinée à venir en engagement libérable.

L'embase peut notamment être réalisée en une seule pièce de matière synthétique moulée, permettant une fabrication de l'engin de façon simple et à un coût réduit.

Avantageusement, chaque branche comprend un repose-pied sur lequel l'enfant peut appuyer l'un de ses pieds.

Selon une forme de réalisation possible de l'invention, l'engin comprend une tige saillante, faisant saillie de l'arrière du siège, vers le haut, selon une direction oblique inclinée vers l'arrière.

Cette tige est apte à être saisie par un adulte pour conduire l'engin, de façon à ce que cet adulte puisse conserver une maîtrise de l'engin.

La tige peut être équipée d'une poignée terminale et peut comprendre des moyens pour son réglage en longueur ou son repliage.

De préférence, ledit montant avant médian et ladite tige saillante sont reliés l'un à l'autre de façon rigide, par une traverse destinée à recevoir le siège et par un montant médian arrière destiné à recevoir la tige saillante.

L'ensemble présente ainsi une rigidité appropriée et une résistance élevée.

Lorsque l'engin comprend ladite tige saillante, selon une forme de réalisation, l'engin comprend un garde-corps circulaire relié d'une part à un montant coulissant avant, situé en avant du siège, et relié d'autre part à une pièce coulissante arrière, apte à coulisser le long dudit montant médian arrière ; ledit montant coulissant avant est apte à coulisser entre une position de dépliage, dans laquelle il fait saillie vers le haut et est apte à placer le garde-corps dans une position fonctionnelle, efficace pour maintenir un enfant sur le siège, et une position de pliage dans laquelle il est descendu de façon à se trouver dans une position inférieure, plaçant le garde-corps dans une position de repliage ; ladite pièce coulissante arrière est mobile entre une position de dépliage dans laquelle elle se trouve en une position inférieure proche de l'arrière du siège et permet de placer le garde-corps dans ladite position fonctionnelle, et une position de pliage, dans laquelle elle se trouve en une position supérieure, éloignée de l'arrière du siège, et permet de placer le garde-corps dans ladite position de repliage.

Ainsi, les mobilités dudit montant coulissant avant et de ladite pièce coulissante arrière permettent, dans ladite position de dépliage, de placer le garde-corps soit dans ladite position efficace pour maintenir un enfant en position sur le siège, et, dans ladite position de pliage, de placer le garde-corps dans une position dans laquelle le-corps abattu contre le siège, de sorte que l'engin a un encombrement réduit.

Selon une forme de réalisation préférée de l'engin, lorsque ce dernier comprend ce garde-corps :
- ledit montant coulissant avant comporte à sa partie supérieure une barre transversale de saisie, propre à constituer une double poignée que l'enfant peut saisir à la manière d'un guidon et propre à constituer une portion avant dudit garde-corps, et
- l'engin comprend des pièces de garde-corps amovibles, propres à être reliées, d'une part, à ladite barre transversale de saisie, et, d'autre part, à ladite pièce coulissante arrière, pour constituer le garde-corps.

Ainsi, lorsque l'enfant est très jeune, l'engin peut être utilisé avec lesdites pièces de garde-corps amovibles, pour former le garde-corps, et, lorsque l'enfant est plus âgé, ces pièces peuvent être retirées de façon à ne conserver que ladite barre transversale de saisie, laquelle est alors utilisable comme une double poignée destinée à être saisi par l'enfant, à la manière d'un guidon.

Selon une autre caractéristique de l'invention, ladite pièce coulissante arrière est conformée de manière à former un dossier d'appui pour le dos de l'enfant assis sur le siège.

Selon encore une autre caractéristique de l'invention, l'engin comprend une poche en un matériau léger et souple, notamment en filet, apte à être accrochée en dessous du siège, à l'extrémité inférieure du montant avant médian et aux extrémités arrière desdites branches déployables.

Cette poche permet ainsi de constituer un rangement pour divers objets, en particulier pour des jouets de l'enfant.

L'invention sera bien comprise, et d'autres caractéristiques et avantages de celle-ci apparaîtront, en référence au dessin schématique annexé, représentant, à titre d'exemples non limitatifs, plusieurs formes de réalisation d'éléments que comprend l'ensemble d'éléments qu'elle concerne.
La figure 1 est une vue de l'engin en perspective, dans un état de dépliage, selon une première configuration de cet engin, utilisable avec un enfant déjà un peu âgé ;
la figure 2 est une vue en perspective d'un châssis que comprend l'engin, selon le même angle de vue que la figure 1, ce châssis incluant une structure médiane, deux branches inférieures déployables, une embase inférieure avant, un coulisseau et deux biellettes reliant ce coulisseau auxdites branches inférieures déployables ;
la figure 3 est une vue partielle de la partie avant dudit châssis, à échelle agrandie, en coupe selon la ligne III-III de la figure 2 ;
la figure 4 est une vue en perspective de l'engin selon le même angle de vue que la figure 1, dans un état de pliage de l'engin ;
la figure 5 est une vue de l'engin similaire à la figure 1, dans une deuxième configuration de cet engin, incluant un garde-corps utilisable avec un enfant très jeune ; et
la figure 6 est une vue de l'engin similaire à la figure 5, dans un état de pliage.

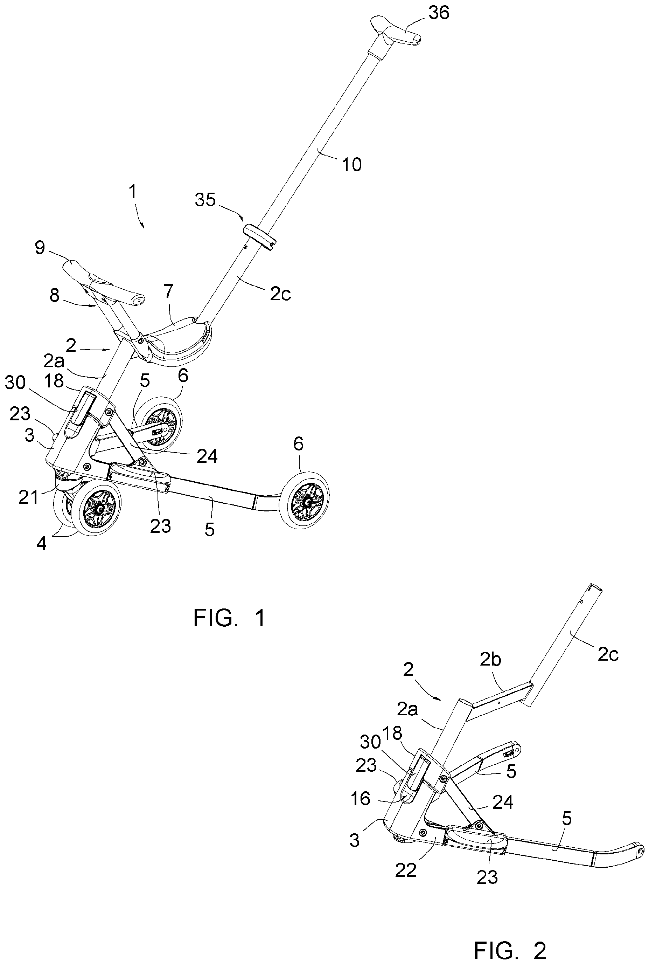

La figure 1 représente un engin roulant 1 destiné à être chevauché par un enfant, comprenant essentiellement un élément structurel médian 2, une embase inférieure 3, une paire de roues avant 4, deux branches déployables 5, des roues arrière 6, un siège 7, un montant 8 en avant du siège 7, comportant une barre transversale 9, et une tige arrière oblique 10.

L'élément structurel médian 2 est plus particulièrement visible sur la figure 2, sur laquelle le siège 7, le montant 8, la barre 9 la poignée 10 ont été retirés. Comme cela visible, cet élément 2 comprend un montant avant inférieur 2a, une traverse médiane 2b et un montant arrière supérieur 2c.

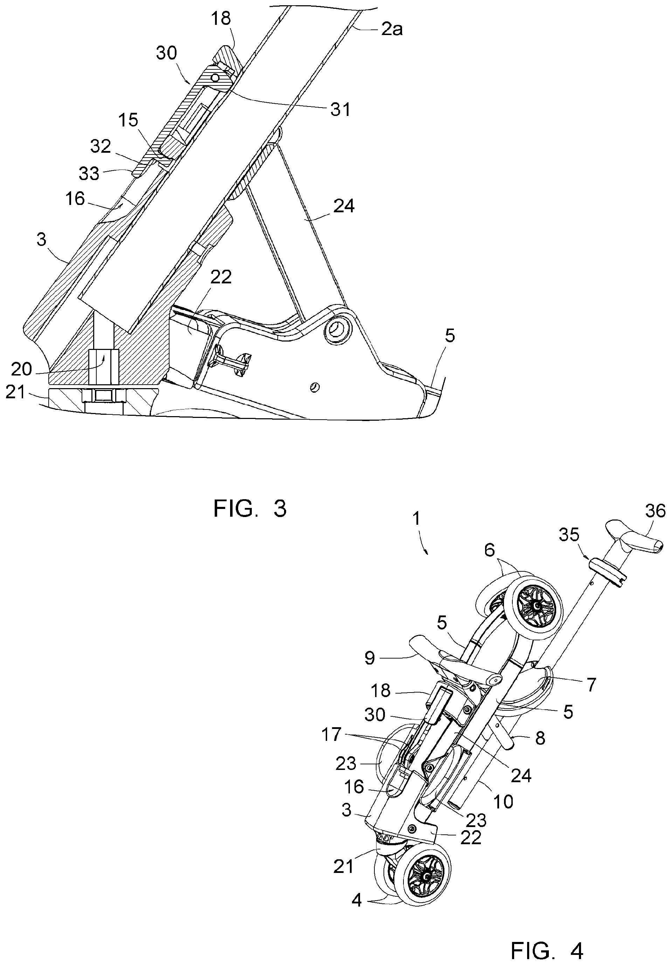

En référence aux figures 1 à 3, il apparaît que le montant avant inférieur 2a est incliné vers l'arrière et qu'il est solidaire, à sa partie inférieure, de l'embase 3. La liaison entre ce montant 2a et l'embase 3 est réalisée au moyen de vis, l'embase 3 comprenant à cet effet au moins un trou à vis visible sur la figure 3.

La traverse médiane 2b est destinée à recevoir et à supporter le siège 7.

Le montant arrière supérieur 2c est incliné vers l'arrière ; il est tubulaire et destiné à recevoir la tige arrière oblique 10.

L'embase 3 est formée par pièce en matière synthétique moulée ; sur sa face avant, elle forme une cavité de réception d'une portion de crochetage 32 décrite plus loin, cavité définissant un rebord de crochetage 15. En dessous de cette cavité, l'embase 3 forme un évidement 16 permettant l'engagement d'un doigt de l'utilisateur pour le soulèvement d'une patte pivotante 30 décrite plus loin, comportant ladite portion de crochetage.

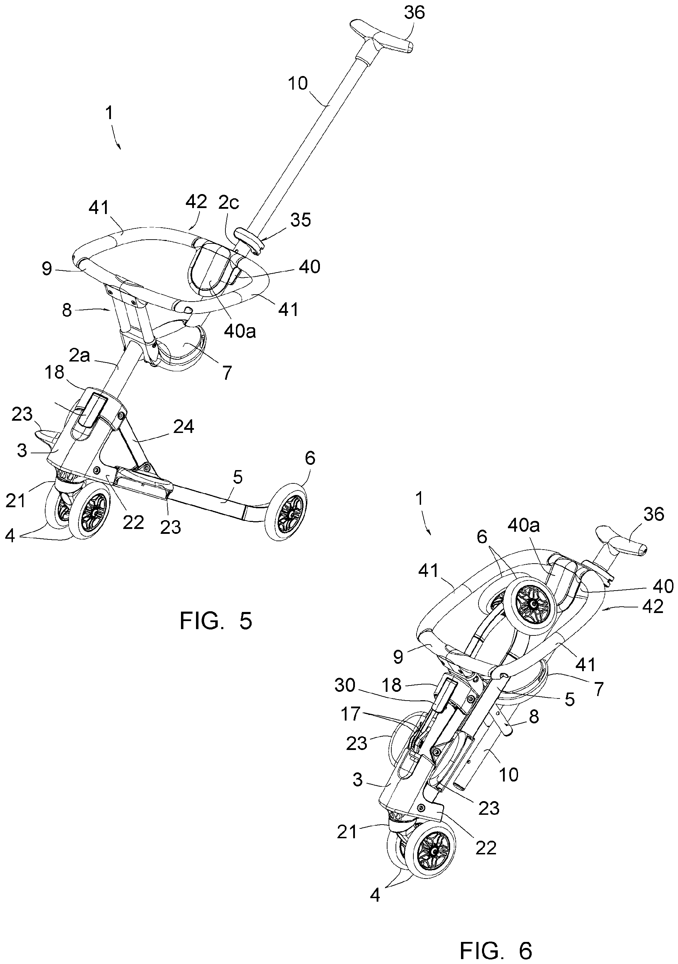

À sa partie supérieure, l'embase 3 est reliée à deux ressorts en lame 17 de forme convexe, visibles sur les figures 4 et 6 ; ces ressorts 17 sont aptes, par leur déformabilité élastique, à être franchis par un coulisseau 18 engagé sur le montant 2a lorsque ce coulisseau 18 est dans une position proche de l'embase 3 et constituent des points durs assurant le positionnement de ce coulisseau 18 dans cette position de proximité avec l'embase 3.

À sa partie inférieure, l'embase 3 comprend une cavité verticale 20 de réception d'un doigt d'assemblage solidaire d'un porte-roue 21 sur lequel est montée la paire de roues avant 4.

Également à sa partie inférieure, l'embase 3 présente deux chapes 22 dans lesquelles les branches 5 sont montés pivotantes. Ces deux chapes 22 forment un angle de l'ordre de 70° l'une avec l'autre de telle sorte que les deux plans dans lesquels pivotent lesdites branches 5 forment entre eux un angle identique que les deux branches 5, dans la position de dépliage de l'engin 1 représentée sur la figure 1 forment également entre elles un angle identique.

Chaque branche 5 est reliée de manière pivotante, par une extrémité avant, à une chape 22 de l'embase 3, et comprend une roue 6 à une extrémité arrière. Elle comprend, fixée à elle, du côté de la chape 22, un repose-pied 23 sur lequel l'enfant peut appuyer son pied lorsqu'il est assis sur le siège 7. Ce repose-pied 23 forme une chape à laquelle est reliée une biellette 24, elle-même reliée par son extrémité opposée au coulisseau 18.

En référence plus particulièrement aux figures 1 et 3, il apparaît que le coulisseau 18 comporte ladite patte pivotante 30, reliée à lui au niveau d'une extrémité supérieure. La patte 30 forme, à cette extrémité supérieure, une came 31 d'appui contre le montant 2a, et forme à son extrémité inférieure, outre ladite portion de crochetage 32, une partie longitudinale inférieure saillante 33 constituant une surface de prise d'appui pour soulèvement de la patte 30 par rapport au coulisseau 18.

Le siège 7 constitué par pièce en matière synthétique moulée. De retour à la figure 1, il apparaît que cette pièce forme une paire de tubes avant inclinés vers l'avant.

Le montant 8 est situé en avant du siège 7 et est formé par deux tubes parallèles engagés de façon coulissante dans la paire de tubes mentionnés ci-dessus, située sur l'avant du siège 7. Des tétons arrondis associé à des ressorts internes aux tubes formant le montant 8 sont aptes à prendre place dans des trous aménagés dans les tubes formant ladite paire de tubes située en avant du siège 7 de façon à caler le montant 8 dans la position de dépliage montrée sur la figure 1. Ces tétons peuvent être enfoncés dans ces trous de façon à être extraits des trous et à rendre possible ainsi le coulissement du montant 8 dans la position de repliage montrée sur la figure 4. Un tel système à téton, ressort et trou est du type bien connu sur des engins pour enfants ayant des tubes coulissants devant être maintenus dans une ou plusieurs positions, en particulier sur des trottinettes.

La barre transversale 9 est légèrement courbe et constitue une double poignée apte à être saisie par un enfant assis sur le siège 7, à la manière d'un guidon.

La tige arrière oblique 10 est engagée de façon coulissante dans le montant supérieur incliné 2c et est apte à coulisser à l'intérieur de lui. Elle peut être immobilisée dans une position déterminée au moyen d'un système 35 de serrage circonférentiel, bien connu dans son principe, en particulier du même type qu'un système servant à immobiliser le tube d'une selle d'un vélo. La tige 10 comprend une poignée 36 de saisie à son extrémité supérieure, destinée à être saisie par un adulte pour conduire l'engin 1.

En comparant les figures 1 et 4, il se comprend que les deux branches 5 sont mobiles en pivotement entre l'état de dépliage montré sur la figure 1, dans lequel les extrémités arrière des branches 5 sont placées à distance du montant avant 2a et les roues arrière 6 sont situées, avec les roues avant 4, dans un plan s'étendant à distance du siège 7, et l'état de pliage montré sur la figure 4, dans laquelle les deux branches 5 sont rapprochées du montant 2a et les roues arrière 6 sont situées au-dessus du siège 7, l'une à proximité de l'autre. Sur la figure 4, également, il apparaît que le montant 8 est dans une position abaissée et que la tige 10 est rentrée dans le montant arrière 2c, l'engin 1 ayant ainsi un encombrement réduit.

À l'état de dépliage, le coulisseau 18 est maintenu dans sa position inférieure de coulissement le long du montant 2a par l'engagement de la portion de crochetage 32 que forme la patte 30 derrière le rebord de crochetage 15 que forme l'embase 3.

Pour passer de l'état de dépliage montré sur la figure 1 à l'état de pliage montré sur la figure 4, l'utilisateur soulève la patte 30 de façon à la libérer de son engagement avec l'embase 3 puis rabat l'élément structurel médian 2 en direction des branches 5, conduisant le coulisseau 18 vers sa position de coulissement supérieure montrée sur la figure 4 et amenant les branches 5 dans la position de repliage montrée sur cette figure 4. Le montant 8 et la tige 10 sont amenés dans leur position de pliage également représentée sur cette figure 4.

Pour déplier l'engin 1, l'élément structurel médian 2 est écarté des branches 5 selon un mouvement inverse, jusqu'à amener la patte 30 en prise avec l'embase 3 et immobiliser ainsi l'engin 1 dans sa position de dépliage.

Les figures 5 et 6 montrent un engin 1 de structure identique à celui qui vient d'être décrit, et les éléments déjà décrits sont désignés par les mêmes références numériques.

Cet engin 1 comprend une pièce arrière coulissante 40, engagée de façon coulissante sur le montant arrière incliné 2c, qui forme par ailleurs, du côté tourné vers l'avant de l'engin 1, un dossier 40a contre lequel l'enfant assis sur le siège 7 peut appuyer son dos.

Sur cet engin 1, ont été monté des pièces de garde-corps 41 amovibles qui forment, avec ladite barre transversale 9 un garde-corps 42 circulaire propre à assurer le maintien d'un très jeune enfant en position sur le siège 7. Ces pièces 41 sont reliées à la barre transversale 9, d'une part, et à la pièce coulissante arrière 40, d'autre part, notamment au moyen de vis.

En comparant les figures 5 et 6, il se comprend que le montant avant 8 est apte à coulisser entre la position de dépliage (voir figure 5), dans laquelle il fait saillie vers le haut et est apte à placer le garde-corps 42 dans une position fonctionnelle, efficace pour maintenir un enfant sur le siège 7, et une position de pliage (voir figure 6) dans laquelle il est descendu de façon à se trouver dans une position inférieure, plaçant le garde-corps 42 dans une position de repliage peu encombrante ; ladite pièce coulissante arrière 40 est mobile entre une position de dépliage (voir figure 5) dans laquelle elle se trouve en une position inférieure proche de l'arrière du siège 7 et permet de placer le garde-corps 42 dans ladite position fonctionnelle, et une position de pliage (voir figure 6), dans laquelle elle se trouve en une position supérieure, éloignée de l'arrière du siège 7, et permet de placer le garde-corps 42 dans ladite position de repliage.

Il apparaît de ce qui précède que l'invention fournit un engin roulant destiné à être chevauché par un enfant, présentant les avantages déterminants d'être peu encombrant à l'état de pliage et d'être très facile et rapide à déplier, selon un mode d'actionnement simple et intuitif.

L'invention a été décrite ci-dessus en référence à des formes de réalisation fournies uniquement à titre d'exemples. Il va de soi qu'elle s'étend à toutes les autres formes de réalisations couvertes par les revendications ci-annexées.

## Revendications

1. Engin roulant (1) destiné à être chevauché par un enfant, comprenant :
- un montant avant médian (2a), comprenant au moins une roue avant (4) à son extrémité inférieure ;
- un siège (7) situé au niveau de l'extrémité supérieure du montant avant médian (2a) ;
- une première branche déployable (5), reliée de manière pivotante, par une extrémité avant, à une partie inférieure du montant avant médian (2a), et comprenant une roue (6) à une extrémité arrière ; cette première branche déployable (5) est mobile en pivotement entre une position de dépliage, dans laquelle l'extrémité arrière de cette branche (5) est placée à distance dudit montant avant médian (2a) et la roue arrière (6) est située, avec la ou les roues avant (4), dans un plan s'étendant à distance du siège (7), et une position de pliage, dans laquelle la branche (5) est rapprochée dudit montant avant médian (2a) ;
- un coulisseau (18) mobile en coulissement le long dudit montant avant médian (2a) ; et
- de moyens libérables (15, 30, 32) de maintien du coulisseau (18) ;
**caractérisé en ce que** :
- l'engin comprend une deuxième branche déployable (5) reliée de manière pivotante, par une extrémité avant, à une partie inférieure du montant avant médian (2a), et comprenant une roue (6) à une extrémité arrière ; les deux branches déployables (5) sont mobiles en pivotement entre lesdites positions de dépliage et de repliage, dans des plans de pivotement respectifs desdites branches (5) qui forment l'un avec l'autre un angle aigu ;
- les branches (5) sont reliées à une partie inférieure du montant avant médian (2a), de sorte que, dans ladite position de pliage, les roues arrière (6) se situent au-dessus du siège (7) ;
- deux biellettes (24) sont situées sur deux côtés opposés du coulisseau (18) et relient ce coulisseau (18) auxdites branches (5), une première biellette (24) étant située sur un premier côté du montant avant médian (2a) et étant reliée à une première desdites branches (5), et la deuxième biellette (24) étant située sur un deuxième côté du montant avant médian (2a), opposé au premier côté, et étant reliée à la deuxième branche (5) ; le coulisseau (18) est mobile le long du montant avant médian (2a) entre une position inférieure, dans laquelle les biellettes (24) amènent lesdites branches (5) dans ladite position de dépliage et une position supérieure, dans laquelle les biellettes (24) amènent lesdites branches (5) dans ladite position de pliage ; et
- les moyens libérables (15, 30, 32) sont aptes à maintenir le coulisseau (18) dans ladite position inférieure.

2. Engin (1) selon la revendication 1, **caractérisé en ce que** l'angle que forment l'un avec l'autre les deux plans dans lesquels les deux branches (5) pivotent est compris entre environ 30° et environ 80°.

3. Engin (1) selon la revendication 1 ou la revendication 2, **caractérisé en ce que** ladite au moins une roue avant (4) est montée pivotante sur une embase (3) solidaire de la partie inférieure dudit montant avant médian (2a).

4. Engin (1) selon la revendication 3, **caractérisé en ce que** ladite embase (3) forme des chapes (22) recevant les extrémités avant desdites branches (5) et permettant ainsi le montage pivotant de ces branches (5) sur le montant avant médian (2a).

5. Engin (1) selon la revendication 3 ou la revendication 4, **caractérisé en ce que** ladite embase (3) forme certains (15) desdits moyens (15, 30, 32) de maintien libérables.

6. Engin (1) selon la revendication 5, **caractérisé en ce que** :
- lesdits moyens de maintien libérables comprennent une patte pivotante (30) solidaire du coulisseau (18), incluant une portion crochetage (32) ; et
- ladite embase (3) forme une cavité délimitant un rebord de crochetage (15) derrière lequel ladite portion de crochetage (32) est destinée à venir en engagement libérable.

7. Engin (1) selon l'une des revendications 1 à 6, **caractérisé en ce que** chaque branche (5) comprend un repose-pied (23) sur lequel l'enfant peut appuyer l'un de ses pieds.

8. Engin (1) selon l'une des revendications 1 à 7, **caractérisé en ce qu'**il comprend une tige saillante (10), faisant saillie de l'arrière du siège (7), vers le haut, selon une direction oblique inclinée vers l'arrière.

9. Engin (1) selon la revendication 8, **caractérisé en ce que** ledit montant avant médian (2a) et ladite tige saillante (10) sont reliés l'un à l'autre de façon rigide, par une traverse (2b) destinée à recevoir le siège (7) et par un montant médian arrière (2c) destiné à recevoir la tige saillante (10).

10. Engin (1) selon la revendication 9, **caractérisé en ce qu'**il comprend un garde-corps circulaire (42) relié d'une part à un montant coulissant (8) avant, situé en avant du siège (7), et relié d'autre part à une pièce coulissante (40) arrière, apte à coulisser le long dudit montant médian arrière (2c) ; ledit montant coulissant (8) avant est apte à coulisser entre une position de dépliage, dans laquelle il fait saillie vers le haut et est apte à placer le garde-corps (42) dans une position fonctionnelle, efficace pour maintenir un enfant sur le siège (7), et une position de pliage dans laquelle il est descendu de façon à se trouver dans une position inférieure, plaçant le garde-corps (42) dans une position de repliage ; ladite pièce coulissante (40) arrière est mobile entre une position de dépliage dans laquelle elle se trouve en une position inférieure proche de l'arrière du siège (7) et permet de placer le garde-corps (42) dans ladite position fonctionnelle, et une position de pliage, dans laquelle elle se trouve en une position supérieure, éloignée de l'arrière du siège (7), et permet de placer le garde-corps (42) dans ladite position de repliage.

11. Engin (1) selon la revendication 10, **caractérisé en ce que** :
- ledit montant coulissant (8) avant comporte à sa partie supérieure une barre transversale de saisie (9), propre à constituer une double poignée que l'enfant peut saisir à la manière d'un guidon et propre à constituer une portion avant dudit garde-corps (42), et
- l'engin (1) comprend des pièces de garde-corps (41) amovibles, propres à être reliées, d'une part, à ladite barre transversale de saisie (9), et, d'autre part, à ladite pièce coulissante (40) arrière, pour constituer le garde-corps (42).

12. Engin (1) selon la revendication 10 ou la revendication 11, **caractérisé en ce que** ladite pièce coulissante (40) arrière est conformée de manière à former un dossier (40a) d'appui pour le dos de l'enfant assis sur le siège (7).

13. Engin (1) selon l'une des revendications 1 à 12, **caractérisé en ce qu'**il comprend une poche en un matériau léger et souple, notamment en filet, apte à être accrochée en dessous du siège (7), à l'extrémité inférieure du montant avant médian (2a) et aux extrémités arrière desdites branches déployables (5).
